# EUROPEAN PATENT APPLICATION

(11) **EP 4 755 553 A1**
(43) Date of publication of application: **10.06.2026**
(21) Application number: 23947478.6
(22) Date of filing: 28.07.2023
(51) Int. Cl.: B23B 27/00

(54) **CUTTING TOOL**

(71) Applicant: Sumitomo Electric Industries, Ltd., Osaka-shi, Osaka 541-0041 (JP)
(72) Inventor: TANAKA, Yoshizo, Osaka-shi, Osaka 541-0041 (JP); KURIYAMA, Hiromitsu, Osaka-shi, Osaka 541-0041 (JP); OHMORI, Hiroki, Osaka-shi, Osaka 541-0041 (JP)
(74) Representative: Boult Wade Tennant LLP
(86) International application number: PCT/JP2023/027744
(87) International publication number: WO 2025/027679

(57) **Abstract**

A cutting tool according to an embodiment of the present disclosure includes a body portion disposed in a machining space of a machine tool, a sensor provided in the body portion, a wireless communication circuit configured to transmit an output of the sensor, and a first power reception antenna circuit configured to receive a power supplying radio wave transmitted from a power transmission antenna provided in the machining space and to output electric power.

## Description

### TECHNICAL FIELD

The present disclosure relates to a cutting tool.

### BACKGROUND ART

PATENT LITERATURE 1 discloses a cutting tool including a body portion, a sensor unit disposed on the body portion, a wireless communication unit that transmits information indicating the output of the sensor to the outside, and a battery that supplies electric power to each component. The battery is housed in a battery housing portion which is a space provided in the body portion.

This cutting tool is capable of monitoring the state of the cutting tool during machining via the sensor and transmitting the result to the outside.

### CITATION LIST

### [PATENT LITERATURE]

PATENT LITERATURE 1: International Publication No. WO2022/230149

### SUMMARY OF THE INVENTION

A cutting tool according to an embodiment of the present disclosure includes: a body portion disposed in a machining space of a machine tool; a sensor provided in the body portion; a wireless communication circuit configured to transmit an output of the sensor; and a first power reception antenna circuit configured to receive a power supplying radio wave transmitted from a power transmission antenna provided in the machining space and to output electric power.

### BRIEF DESCRIPTION OF DRAWINGS

[FIG. 1] FIG. 1 shows the entire configuration of a cutting machining system in which a cutting tool according to an embodiment is used.
[FIG. 2] FIG. 2 is a functional block diagram showing an example of the configuration of the cutting tool according to the present embodiment.
[FIG. 3A] FIG. 3A shows the appearance of the cutting tool.
[FIG. 3B] FIG. 3B is a cross-sectional view taken along arrows B-B in FIG. 3A.
[FIG. 4] FIG. 4 is an enlarged view of a main part of FIG. 3A.
[FIG. 5] FIG. 5 is an enlarged view of a main part of FIG. 3B.
[FIG. 6] FIG. 6 shows a circuit board and a rectenna as viewed from the front along a Z2-direction.
[FIG. 7] FIG. 7 is a block diagram showing a part of a cutting tool according to a modification.
[FIG. 8] FIG. 8 shows the appearance of a part of the cutting tool according to the present modification.
[FIG. 9] FIG. 9 is a cross-sectional view showing a part of the cutting tool according to the present modification.
[FIG. 10] FIG. 10 shows the appearance of a part of the cutting tool according to the present modification.

### DETAILED DESCRIPTION

### [Problems to be solved by the present disclosure]

In the above-described conventional cutting tool including the sensor, when battery power has been consumed and depleted, the battery needs to be replaced with a new battery. In this case, it is necessary to remove the old battery from the battery housing portion and to install a new battery therein. However, it is difficult to replace the battery during machining.

Therefore, if the machining time becomes long and the battery power is depleted during machining, there is a risk that the state of the cutting machining cannot be monitored thereafter.

Even in a case where the machining time becomes long as described above, it is desirable to appropriately monitor the state of cutting machining.

### [Effects of the present disclosure]

According to the present disclosure, it is possible to appropriately monitor the state during machining.

First, contents of the embodiment will be listed and described.

### [Outline of embodiment]

(1) A cutting tool according to an embodiment of the present disclosure includes a body portion disposed in a machining space of a machine tool, a sensor provided in the body portion, a wireless communication circuit configured to transmit an output of the sensor, and a first power reception antenna circuit configured to receive a power supplying radio wave transmitted from a power transmission antenna provided in the machining space and to output electric power.

With the above configuration, the first power reception antenna circuit that receives the power supplying radio wave transmitted from the power transmission antenna provided inside the machining space is provided, thereby enabling wireless power supplying inside the machining space. Accordingly, the cutting tool can receive power even during machining, and the output of the sensor can be continuously transmitted even if the machining time becomes long. As a result, the state of the cutting machining (the state of the cutting tool) during machining can be appropriately monitored.

(2) The cutting tool of the above (1) may further include a power storage unit configured to store the electric power.

In this case, even if the power supplying radio wave from the power transmission antenna is temporarily interrupted or cannot be temporarily received, the electric power stored in the power storage unit allows the output of the sensor to be continuously transmitted.

(3) In the cutting tool of the above (1) or (2), in a case where the body portion includes a cutting tip, and a shank having a bar shape and having an end portion at which the cutting tip is mounted, the sensor, the wireless communication circuit, and the first power reception antenna circuit may be arranged in the shank, from the end portion side, along a longitudinal direction of the shank, in an order of the sensor, the wireless communication circuit, and the first power reception antenna circuit.

In this case, the sensor can be disposed at the location closest to the cutting tip, which is the machining point, so that sensitivity can be improved. In addition, the first power reception antenna circuit is not disposed between the sensor and the wireless communication circuit, so that the sensor and the wireless communication circuit can be disposed relatively close to each other. As a result, the length of a line for transmitting the output of the sensor to the wireless communication circuit can be shortened, and noise resistance can be improved.

(4) In the cutting tool of the above (3), in a case where the shank includes a recess portion that opens to a side surface of the shank, and a lid portion that closes an opening of the recess portion, the wireless communication circuit and the first power reception antenna circuit may be housed in a housing space defined by the recess portion and the lid portion.

In this case, the wireless communication circuit and the first power reception antenna circuit can be disposed in the shank without being exposed to the outside.

(5) In the cutting tool of the above (4), the lid portion may be made of a material that allows the power supplying radio wave and radio waves transmitted and received by the wireless communication circuit to pass through the material.

In this case, it is possible to suppress the lid portion from obstructing the transmission and reception of the radio waves performed by the wireless communication circuit and the reception of the power supplying radio wave.

(6) In the cutting tool of the above (5), in a case where the wireless communication circuit includes a transmitting and receiving antenna and the first power reception antenna circuit includes a power receiving antenna, the power receiving antenna and the transmitting and receiving antenna may be disposed so as to face the lid portion.

In this case, via the lid portion, the transmission and reception of the radio waves performed by the wireless communication circuit and the reception of the power supplying radio wave can be appropriately performed.

(7) In the cutting tool of the above (4), the lid portion may include a window portion that communicates between the housing space and outside, and a window lid closing the window portion and made of a material that allows the power supplying radio wave and radio waves transmitted and received by the wireless communication circuit to pass through the material.

In this case, it is possible to suppress the window lid from obstructing the transmission and reception of the radio waves performed by the wireless communication circuit and the reception of the power supplying radio wave.

(8) In the cutting tool of the above (7), in a case where the wireless communication circuit includes a transmitting and receiving antenna and the first power reception antenna circuit includes a power receiving antenna, the power receiving antenna and the transmitting and receiving antenna may be disposed so as to face the window lid.

In this case, via the window lid, the transmission and reception of the radio waves performed by the wireless communication circuit and the reception of the power supplying radio wave can be appropriately performed.

(9) In the cutting tool of the above (8), the power receiving antenna and the transmitting and receiving antenna may be disposed close to each other.

In this case, the window portion and the window lid can be made relatively small.

(10) In the cutting tool of any one of the above (1) to (9), a second power reception antenna circuit configured to receive a power supplying radio wave transmitted from the power transmission antenna provided in the machining space and to output electric power, and a combining circuit configured to combine electric power outputted from the first power reception antenna circuit and electric power outputted from the second power reception antenna circuit, may be further provided.

In this case, the reception frequency band of the first power reception antenna circuit and the reception frequency band of the second power reception antenna circuit are set so as to be different from each other, whereby it is possible to receive power supplying radio waves in two different frequency bands.

In addition, in a case where the reception frequency band of the first power reception antenna circuit and the reception frequency band of the second power reception antenna circuit are set so as to be equal to each other, power reception efficiency can be improved by combining the outputs of both circuits.

(11) In the cutting tool of the above (10), in a case where the body portion includes a shank having a bar shape, and the shank includes three recess portions that open to a side surface of the shank and three lid portions that close three openings of the three recess portions, the wireless communication circuit, the first power reception antenna circuit, and the second power reception antenna circuit may be individually housed in three housing spaces defined by the three recess portions and the three lid portions.

In this case, since the respective circuits are individually housed in the three housing spaces, it is possible to reduce mutual interference when the circuits transmit and receive radio waves.

### [Details of embodiment]

Hereinafter, a preferred embodiment will be described with reference to the drawings.

At least some parts of the embodiment described below may be combined as desired.

### [Cutting machining system]

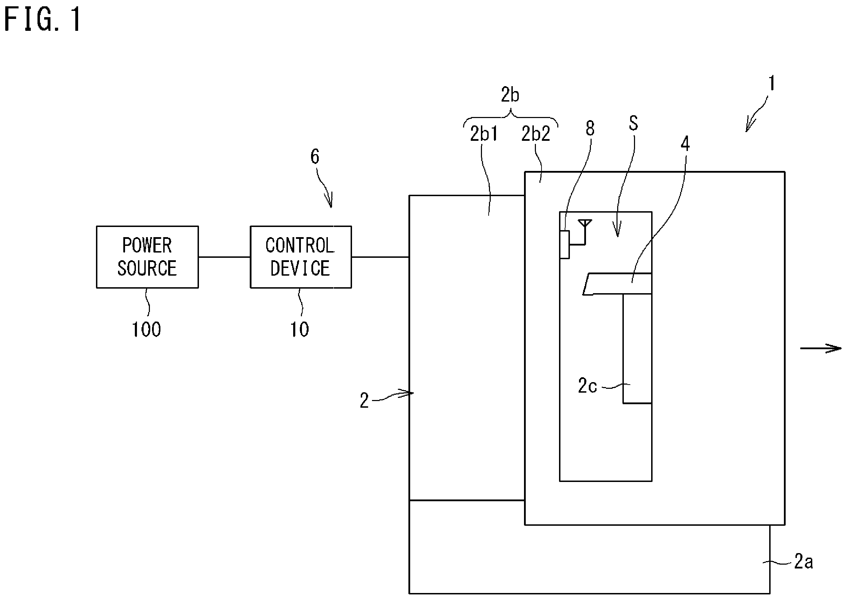

FIG. 1 shows the entire configuration of a cutting machining system in which a cutting tool according to the embodiment is used. In FIG. 1, a cutting machining system 1 includes a machine tool 2 and a power supply device 6, in addition to a cutting tool 4.

The machine tool 2 is, for example, an NC lathe. The machine tool 2 includes a bed 2a and a housing 2b.

The housing 2b is disposed above the bed 2a. The interior of the housing 2b is a machining space S. That is, the housing 2b defines the machining space S above the bed 2a.

A headstock, a chuck for holding a workpiece, etc. are disposed inside the machining space S.

In addition, a turret 2c is disposed inside the machining space S. The cutting tool 4 is held by the turret 2c.

The cutting tool 4 is a tool for performing cutting machining on a workpiece held by the chuck. The cutting tool 4 of the present embodiment includes a sensor, and can monitor the state of the cutting machining (the state of the cutting tool 4) and transmit the result to the outside.

The housing 2b includes a housing body 2b1 and an open-close door 2b2. The housing body 2b1 is fixed to the upper surface of the bed 2a. On the other hand, the open-close door 2b2 is movable in the lateral direction relative to the bed 2a, as indicated by an arrow in FIG. 1.

The open-close door 2b2 is in the closed state, in the position shown in FIG. 1. The open-close door 2b2 moves laterally from the closed state to the open state.

When the open-close door 2b2 is in the open state, the components disposed inside the machining space S are exposed to the outside. When an operator prepares for machining or takes out a workpiece after machining, the open-close door 2b2 is set to the open state.

When the open-close door 2b2 is in the closed state, the operator of the machine tool 2 cannot access the machining space S. Therefore, when the machine tool 2 is performing machining, the open-close door 2b2 remains in the closed state.

The power supply device 6 has a function of wirelessly supplying power to the cutting tool 4. The power supply device 6 includes a power transmission antenna 8 and a control device 10.

The control device 10 has a function of controlling power supplying via the power transmission antenna 8. The control device 10 generates a power supplying signal, based on the electric power supplied from a power source 100, and provides the power supplying signal to the power transmission antenna 8.

The power transmission antenna 8 is provided inside the machining space S. The power transmission antenna 8 transmits the power supplying signal provided by the control device 10, to the cutting tool 4 as a power supplying radio wave.

### [Cutting tool]

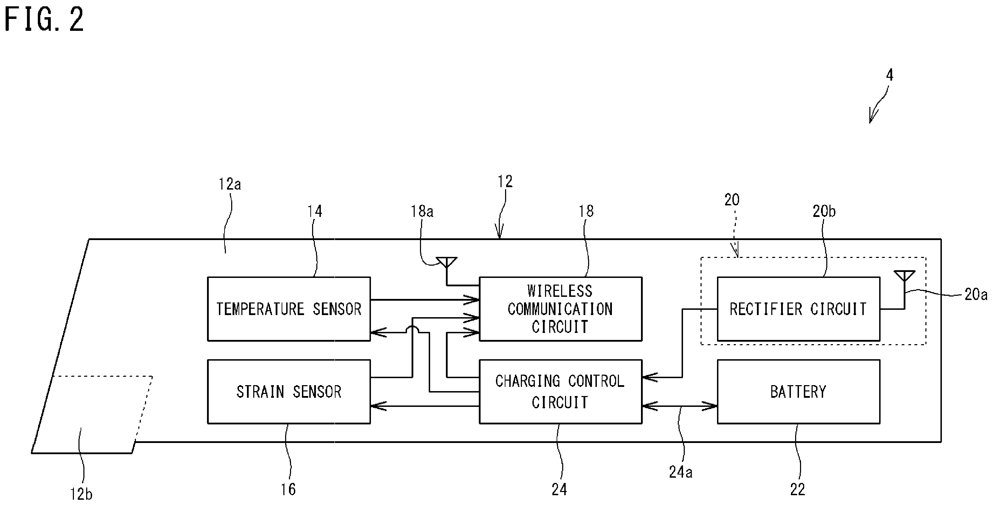

FIG. 2 is a functional block diagram showing an example of the configuration of the cutting tool 4 according to the present embodiment.

As shown in FIG. 2, the cutting tool 4 includes a body portion 12, a strain sensor 14, a strain sensor 16, a wireless communication circuit 18, a rectenna 20, and a power storage unit 22.

The body portion 12 includes a shank 12a and a cutting tip 12b. The shank 12a is a quadrangular prism-shaped metal member that is held by the turret 2c of the machine tool 2. The cutting tip 12b is a blade that cuts a workpiece by coming into contact with the workpiece. The cutting tip 12b is detachably mounted at an end portion of the shank 12a.

The strain sensors 14, 16, the wireless communication circuit 18, the rectenna 20, and the power storage unit 22 are provided to the shank 12a.

The strain sensors 14, 16 are mounted in the shank 12a to detect the state of the cutting tool 4. The strain sensors 14, 16 measure strain on the shank 12a as the state of the cutting tool 4.

The strain sensors 14, 16 are configured to include strain gauges or the like. Upon receiving electric power from a charging control circuit 24, the strain sensors 14, 16 each provide an output corresponding to the strain currently present in the shank 12a to the wireless communication circuit 18. The output from each of the strain sensors 14, 16 indicates strain in the shank 12a.

The rectenna 20 includes a power receiving antenna 20a and a rectifier circuit 20b. The power receiving antenna 20a receives a radio wave from the power supply device 6. The power receiving antenna 20a provides the electric power of the received radio wave to the rectifier circuit 20b. The rectifier circuit 20b rectifies the electric power provided by the power receiving antenna 20a, converts the same into direct-current power, and outputs the direct-current power. The direct-current power outputted from the rectifier circuit 20b is provided to the sensors 14, 16 and the wireless communication circuit 18. That is, the rectenna 20 forms a power reception antenna circuit that receives the power supplying radio wave transmitted from the power transmission antenna 8 provided in the machining space S and that outputs direct-current power.

The direct-current power outputted from the rectenna 20 is provided to the charging control circuit 24.

The charging control circuit 24 has functions such as converting the direct-current power outputted from the rectenna 20 to a specified voltage, controlling charging and discharging of the power storage unit 22, and providing direct-current power from the rectenna 20 and direct-current power from the power storage unit 22 to the sensors 14, 16 and the wireless communication circuit 18.

Upon receiving direct-current power from the rectenna 20, the charging control circuit 24 provides the direct-current power to the sensors 14, 16, the wireless communication circuit 18, and the power storage unit 22. When no direct-current power is provided from the rectenna 20, the charging control circuit 24 provides the electric power stored in the power storage unit 22 to the sensors 14, 16 and the wireless communication circuit 18.

The power storage unit 22 stores the direct-current power provided via the charging control circuit 24. In addition, the power storage unit 22 discharges the stored electric power under the control of the charging control circuit 24. In the present embodiment, the power storage unit 22 is a storage battery (secondary battery). The power storage unit 22 may be a capacitor.

The charging control circuit 24 also has a function of detecting the remaining charge amount of the power storage unit 22. The charging control circuit 24 detects the voltage across a line 24a that connects the charging control circuit 24 and the power storage unit 22, as the remaining charge amount of the power storage unit 22. That is, the charging control circuit 24 has a function as a sensor that detects the remaining charge amount of the power storage unit 22.

The charging control circuit 24 provides information indicating the voltage across the line 24a to the wireless communication circuit 18. Thus, the output of the charging control circuit 24 serving as a sensor indicates the remaining charge amount of the power storage unit 22.

The wireless communication circuit 18 includes a transmitting and receiving antenna 18a, and has a function of wirelessly communicating with a receiver, etc. located outside the machining space S. The wireless communication circuit 18 wirelessly communicates with the receiver via, for example, Bluetooth (a registered trademark). Accordingly, the wireless communication circuit 18 performs wireless communication using a frequency band that includes 2.4 GHz.

The wireless communication circuit 18 wirelessly transmits the outputs of the respective sensors. The outputs of the sensors include strain information based on the outputs of the strain sensor 14 and the strain sensor 16, and remaining charge information based on the output of the charging control circuit 24. The remaining charge information refers to information indicating the remaining charge amount of the power storage unit 22. The remaining charge amount is represented as a numerical value. For example, temperature information, strain information, and remaining charge information are stored in the same packet and are transmitted at predetermined time intervals.

Upon receiving direct-current power from the charging control circuit 24, the wireless communication circuit 18 establishes a communication connection with the receiver and starts wireless communication.

As described above, based on the electric power fed from the power supply device 6, the cutting tool 4 operates the sensors, operates the wireless communication circuit 18, and transmits the outputs of the sensors.

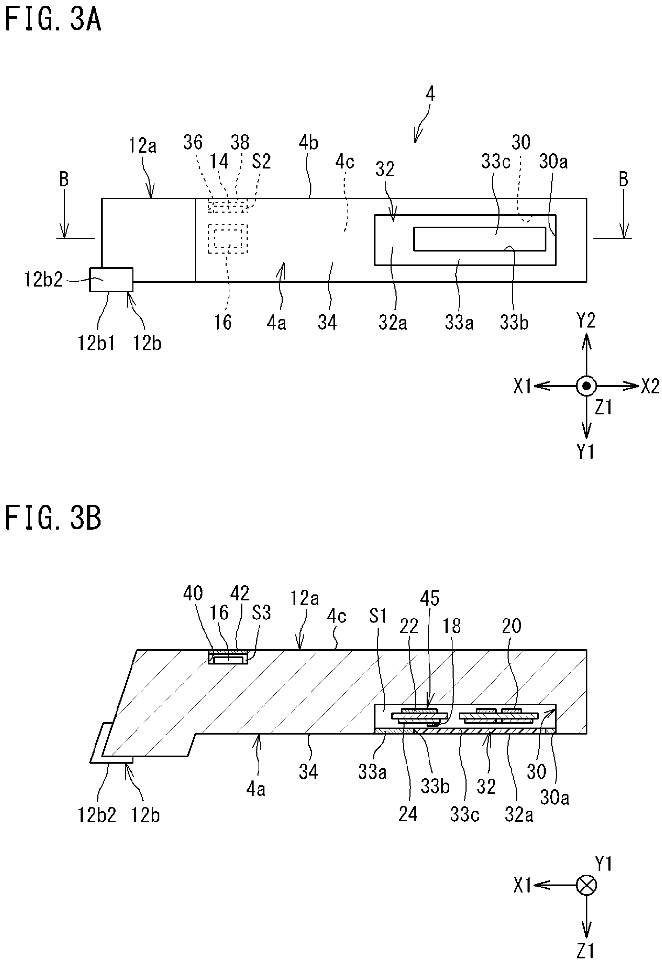

FIG. 3A shows the appearance of the cutting tool 4. FIG. 3A shows a first surface 4a of the cutting tool 4 as viewed from the front.

In the following description, the three mutually orthogonal directions in each drawing are defined as an X-direction, a Y-direction, and a Z-direction. In addition, as shown in FIG. 1, one direction along the X-direction is defined as an X1-direction, and the opposite direction of the X1-direction is defined as an X2-direction. One direction along the Y-direction is defined as a Y1-direction, and the opposite direction of the Y1-direction is defined as a Y2-direction. One direction along the Z-direction is defined as a Z1-direction, and the opposite direction of the Z1-direction is defined as a Z2-direction.

As shown in FIG. 3A, the longitudinal direction of the cutting tool 4 extends along the X-direction. The first surface 4a is one side surface of the cutting tool 4. The first surface 4a of the cutting tool 4 is a surface that is parallel to an X-Y plane and faces the Z1-direction.

As described above, the body portion 12 of the cutting tool 4 includes the shank 12a and the cutting tip 12b. The cutting tip 12b is mounted at the end portion on the X1-direction side of the shank 12a.

A rake face 12b1 of the cutting tip 12b faces the Y1-direction. A side clearance face 12b2 of the cutting tip 12b faces the Z1-direction.

FIG. 3B is a cross-sectional view taken along arrows B-B in FIG. 3A.

As shown in FIG. 3A and FIG. 3B, the shank 12a includes a first recess portion 30 and a lid portion 32.

The first recess portion 30 opens to the first surface 4a.

The lid portion 32 is a rectangular plate-shaped member. The lid portion 32 is provided at an opening 30a of the first recess portion 30. The outer edge of the lid portion 32 is along the inner edge of the opening 30a. The lid portion 32 is fitted into the inner edge of the opening 30a and is fixed to the opening 30a. Thus, the lid portion 32 closes the opening 30a.

An outer surface 32a of the lid portion 32 forms a part of the first surface 4a.

The first surface 4a includes the outer surface 32a of the lid portion 32, and a flat portion 34. The flat portion 34 is a surface portion, of the first surface 4a, that excludes the portion corresponding to the first recess portion 30 and that faces the Z1-direction. The flat portion 34 and the outer surface 32a are flush with each other.

The first recess portion 30 is recessed in the Z2-direction relative to the flat portion 34. The first recess portion 30 has a rectangular shape whose long sides extend along the X-direction when the first surface 4a is viewed from the front.

Accordingly, the lid portion 32 also has a rectangular shape whose long sides extend along the X-direction.

The wireless communication circuit 18, the charging control circuit 24, the rectenna 20, and the power storage unit 22 are housed in a housing space S1. The housing space S1 is a space defined by the first recess portion 30 and the lid portion 32.

The lid portion 32 closes the opening 30a, whereby coolant liquid and the like are prevented from entering the housing space S1 during processing.

As shown in FIG. 3A and FIG. 3B, the lid portion 32 includes a lid body 33a, a window portion 33b, and a window lid 33c.

The lid body 33a is a rectangular plate-shaped metal member. The outer edge of the lid body 33a is along the inner edge of the opening 30a. The lid body 33a is fitted into the inner edge of the opening 30a and is fixed to the opening 30a.

The window portion 33b is formed in the lid body 33a. The window portion 33b is a rectangular hole that communicates between the housing space S1 and the outside. The window portion 33b has a rectangular shape whose long sides extend along the X-direction.

The window lid 33c is a rectangular plate-shaped member. The window lid 33c is made of a material such as resin that allows the power supplying radio wave and the radio waves transmitted and received by the wireless communication circuit 18 to pass through the material.

The outer edge of the window lid 33c is along the inner edge of the window portion 33b. The window lid 33c is fitted into the inner edge of the window portion 33b and is fixed to the window portion 33b.

A seal is formed between the outer edge of the lid body 33a and the inner edge of the opening 30a, and a seal is formed between the outer edge of the window lid 33c and the inner edge of the window portion 33b. This prevents the coolant liquid and the like from entering the housing space S1.

As shown in FIG. 3A, the strain sensor 14 and the strain sensor 16 are provided near the end portion on the X1-direction side of the shank 12a.

The strain sensor 14 is provided on a second surface 4b side. The second surface 4b is one side surface of the cutting tool 4. The second surface 4b of the cutting tool 4 is a surface that is parallel to an X-Z plane and faces the Y2-direction.

A second recess portion 36 is formed on the second surface 4b side of the shank 12a. The second recess portion 36 opens to the second surface 4b. The second recess portion 36 is closed by a sensor lid portion 38.

The strain sensor 14 is house in a housing space S2. The housing space S2 is a space defined by the second recess portion 36 and the sensor lid portion 38.

The strain sensor 16 is provided on a third surface 4c side. The third surface 4c is one side surface of the cutting tool 4. The third surface 4c of the cutting tool 4 is a surface that is parallel to the X-Y plane and faces the Z2-direction.

As shown in FIG. 3B, a third recess portion 40 is formed on the third surface 4c side of the shank 12a. The third recess portion 40 opens to the third surface 4c. The third recess portion 40 is closed by a sensor lid portion 42.

The strain sensor 16 is housed in a housing space S3. The housing space S3 is a space defined by the third recess portion 40 and the sensor lid portion 42.

The housing space S2 and the housing space S1 are in communication with each other through a communication passage (not shown) formed of a groove or a through-hole formed in the shank 12a. Similarly, the housing space S3 and the housing space S1 are in communication with each other through the communication passage formed in the shank 12a.

The strain sensor 14 and the strain sensor 16 are connected to the wireless communication circuit 18 and the charging control circuit 24 inside the housing space S1 via lines passing through the communication passage. These lines are lines for supplying electric power to the strain sensor 14 and the strain sensor 16, and transmitting the output of the strain sensor 14 and the output of the strain sensor 16 to the wireless communication circuit 18.

### [Arrangement of each circuit]

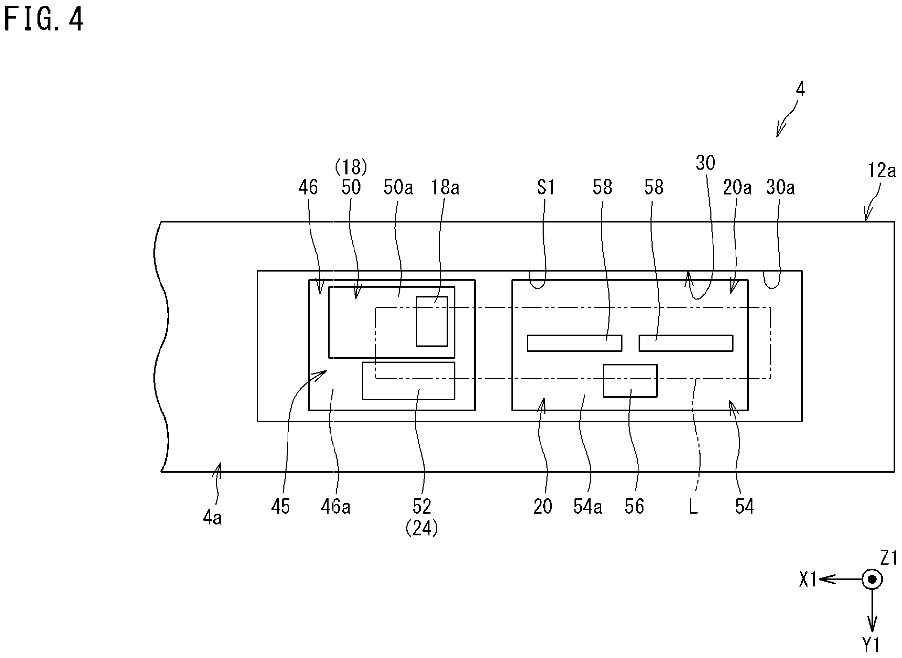

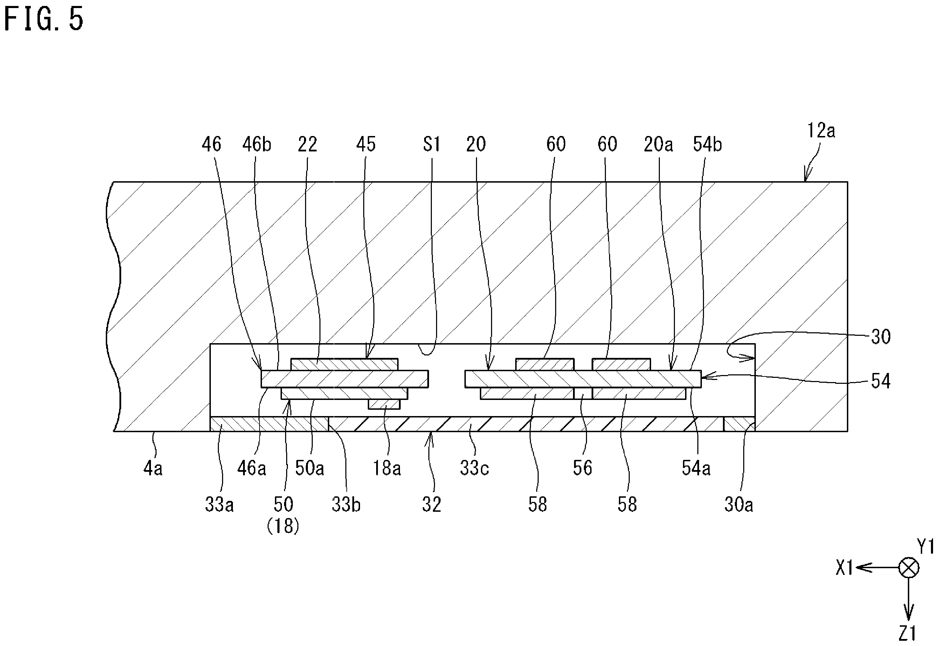

FIG. 4 is an enlarged view of a main part of FIG. 3A. FIG. 5 is an enlarged view of a main part of FIG. 3B.

FIG. 4 shows a state in which the lid portion 32 has been removed. In addition, an alternate long and two short dashes line L in FIG. 4 indicates the contour of the window portion 33b (the window lid 33c), when the first surface 4a is viewed from the front.

A circuit board 45 and the rectenna 20 are housed inside the housing space S1. The circuit board 45 and the rectenna 20 are disposed side by side along the X-direction. The circuit board 45 is disposed on the X1-direction side inside the housing space S1. The rectenna 20 is disposed on the X2-direction side inside the housing space S1.

The circuit board 45 includes a board body 46, a first circuit chip 50, and a second circuit chip 52.

The first circuit chip 50 and the second circuit chip 52 are mounted on a first surface 46a of the board body 46. The first surface 46a of the board body 46 is a surface facing the Z1-direction.

The second circuit chip 52 is a circuit chip including the charging control circuit 24.

The first circuit chip 50 is a circuit chip forming the wireless communication circuit 18.

The first circuit chip 50 includes a chip surface 50a facing the Z1-direction. The transmitting and receiving antenna 18a is provided on the chip surface 50a. The wireless communication circuit 18 is composed of the first circuit chip 50 and the transmitting and receiving antenna 18a.

The transmitting and receiving antenna 18a includes a substrate, and an antenna element mounted on the substrate.

The transmitting and receiving antenna 18a is provided near an end edge on the X2-direction side of the chip surface 50a. Accordingly, the transmitting and receiving antenna 18a is disposed close to the rectenna 20.

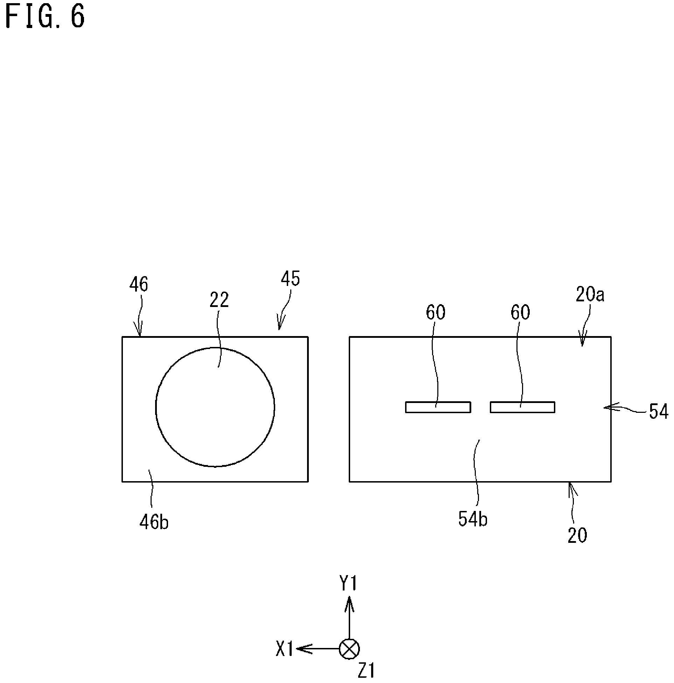

FIG. 6 shows the circuit board 45 and the rectenna 20 as viewed from the front along the Z2-direction.

As shown in FIG. 5 and FIG. 6, the power storage unit 22 is mounted on a second surface 46b of the board body 46. The second surface 46b of the board body 46 is a surface facing the Z2-direction. The power storage unit 22 is connected to a connection terminal (not shown) or the like provided to the board body 46.

As shown in FIG. 4 and FIG. 5, the rectenna 20 includes the aforementioned power receiving antenna 20a and a third circuit chip 56.

The third circuit chip 56 is a circuit chip including the rectifier circuit 20b. The third circuit chip 56 is mounted on a first surface 54a of an antenna substrate 54 of the power receiving antenna 20a. The first surface 54a of the antenna substrate 54 is a surface facing the Z1-direction.

The power receiving antenna 20a includes the aforementioned antenna substrate 54, a pair of antenna elements 58, and a pair of power supply lines 60.

The pair of antenna elements 58 are conductor patterns such as copper foil mounted on the first surface 54a. Each of the pair of antenna elements 58 has a rectangular or linear shape and extends in a row along the X-direction.

The pair of power supply lines 60 are conductor patterns such as copper foil mounted on a second surface 54b. The second surface 54b of the antenna substrate 54 is a surface facing the Z2-direction. The pair of power supply lines 60 are provided at positions corresponding to the pair of antenna elements 58 in the X-Y plane.

The pair of power supply lines 60 and the pair of antenna elements 58 are connected via vias or the like formed in the antenna substrate 54.

The power receiving antenna 20a receives a power supplying radio wave using the pair of antenna elements 58, and outputs electric power through the pair of power supply lines 60. The electric power outputted through the power supply lines 60 is provided to the rectifier circuit 20b included in the third circuit chip 56.

The rectenna 20 and the circuit board 45 are fixed inside the housing space S1. The rectenna 20 and the circuit board 45 may be packaged in a shape that allows the rectenna 20 and the circuit board 45 to be fixed inside the housing space S1 and be fixed inside the housing space S1 as a package, or may be fixed inside the housing space S1 using a bracket or the like.

As described above, in the present embodiment, the shank 12a includes the first recess portion 30 that opens to the first surface 4a of the shank 12a and the lid portion 32 that closes the opening 30a of the first recess portion 30, and the first circuit chip 50 (the wireless communication circuit 18) and the rectenna 20 are housed in the housing space S1 defined by the first recess portion 30 and the lid portion 32. Thus, the first circuit chip 50 and the rectenna 20 can be disposed in the shank 12a without being exposed to the outside.

As shown in FIG. 5, the pair of antenna elements 58 are mounted on the first surface 54a, as described above. In addition, the transmitting and receiving antenna 18a is mounted on the chip surface 50a.

Accordingly, the pair of antenna elements 58 and the transmitting and receiving antenna 18a are disposed so as to face the lid portion 32.

More specifically, as shown in FIG. 4, the pair of antenna elements 58 and the transmitting and receiving antenna 18a are positioned in a range corresponding to the window portion 33b (the window lid 33c), when the first surface 4a is viewed from the front.

Accordingly, the pair of antenna elements 58 and the transmitting and receiving antenna 18a are disposed so as to face the window lid 33c.

Here, as described above, the window lid 33c is made of a material that allows radio waves to pass through the material.

Thus, it is possible to suppress the window lid 33c from obstructing the transmission and reception of the radio waves performed by the transmitting and receiving antenna 18a and the reception of the power supplying radio wave performed by the pair of antenna elements 58.

Furthermore, since the pair of antenna elements 58 and the transmitting and receiving antenna 18a are disposed so as to face the window lid 33c, the transmission and reception of radio waves via the window lid 33c can be appropriately performed.

In addition, in the present embodiment, the transmitting and receiving antenna 18a is disposed close to the rectenna 20 (the pair of antenna elements 58). Therefore, for example, compared to a case where the transmitting and receiving antenna 18a is provided near the end edge on the X1-direction side of the chip surface 50a, or a case where the circuit board 45 and the rectenna 20 are disposed with a space therebetween in the X-direction, the window portion 33b and the window lid 33c can be made smaller.

In the cutting tool 4 having the above-described configuration, the strain sensor 14 (the strain sensor 16), the first circuit chip 50 (the wireless communication circuit 18), and the rectenna 20 are arranged in the shank 12a, from the end portion side on the X1-direction side, along the longitudinal direction (X-direction) of the shank 12a, in the order of the strain sensor 14 (the strain sensor 16), the first circuit chip 50, and the rectenna 20.

In this case, the strain sensor 14 (the strain sensor 16) can be disposed at the location closest to the cutting tip 12b, which is the machining point, so that sensitivity can be improved. In addition, the rectenna 20 is not disposed between the sensors 14, 16 and the first circuit chip 50 (the wireless communication circuit 18), so that the sensors 14, 16 and the first circuit chip 50 can be disposed relatively close to each other. As a result, the length of each line for transmitting the outputs of the sensors 14, 16 to the wireless communication circuit 18 can be shortened, and noise resistance can be improved.

According to the present embodiment, the rectenna 20 that receives the power supplying radio wave transmitted from the power transmission antenna 8 provided inside the machining space S is provided, thereby enabling wireless power supplying inside the machining space S. Therefore, the cutting tool 4 can receive power even during machining, and the outputs of the sensors 14, 16 can be continuously transmitted even if the machining time becomes long. As a result, the state of the cutting machining can be appropriately monitored.

In addition, in the present embodiment, the cutting tool 4 includes the power storage unit 22 that stores the electric power outputted from the rectenna 20. Therefore, even if the power supplying radio wave from the power transmission antenna 8 is temporarily interrupted or cannot be temporarily received, the electric power stored in the power storage unit 22 allows the outputs of the sensors 14, 16 to be continuously transmitted.

### [Modification]

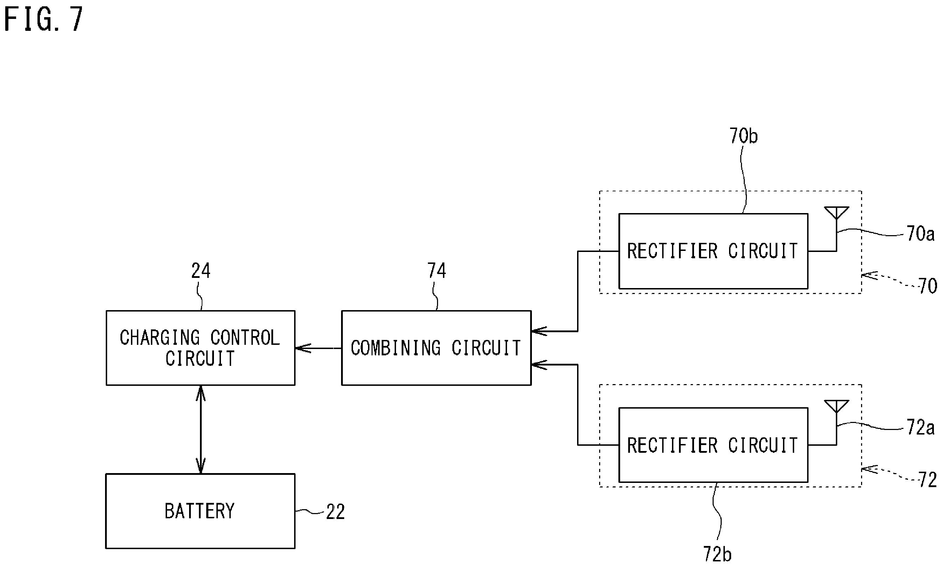

FIG. 7 is a block diagram showing a part of a cutting tool 4 according to a modification.

The present modification is different from the above embodiment in that a plurality of rectennas (a first rectenna 70 and a second rectenna 72) are provided.

In FIG. 7, the first rectenna 70 includes a power receiving antenna 70a and a rectifier circuit 70b.

The second rectenna 72 includes a power receiving antenna 72a and a rectifier circuit 72b.

The rectifier circuit 70b and the rectifier circuit 72b are connected to a combining circuit 74. Thus, the direct-current power outputted from the first rectenna 70 and the second rectenna 72 is provided to the combining circuit 74.

The combining circuit 74 combines the electric power outputted from the first rectenna 70 and the electric power outputted from the second rectenna 72, and provides the combined power to the charging control circuit 24.

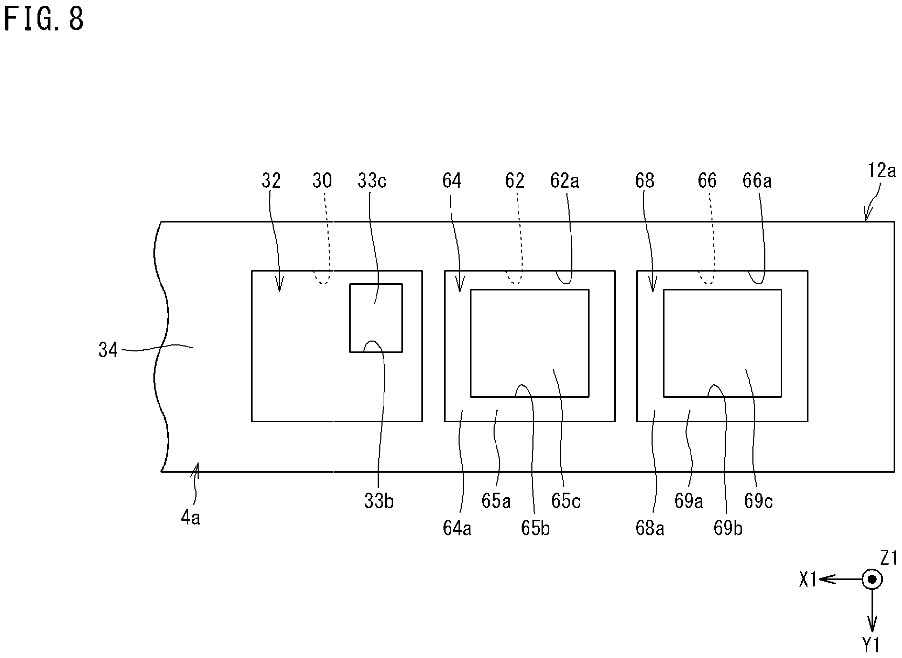

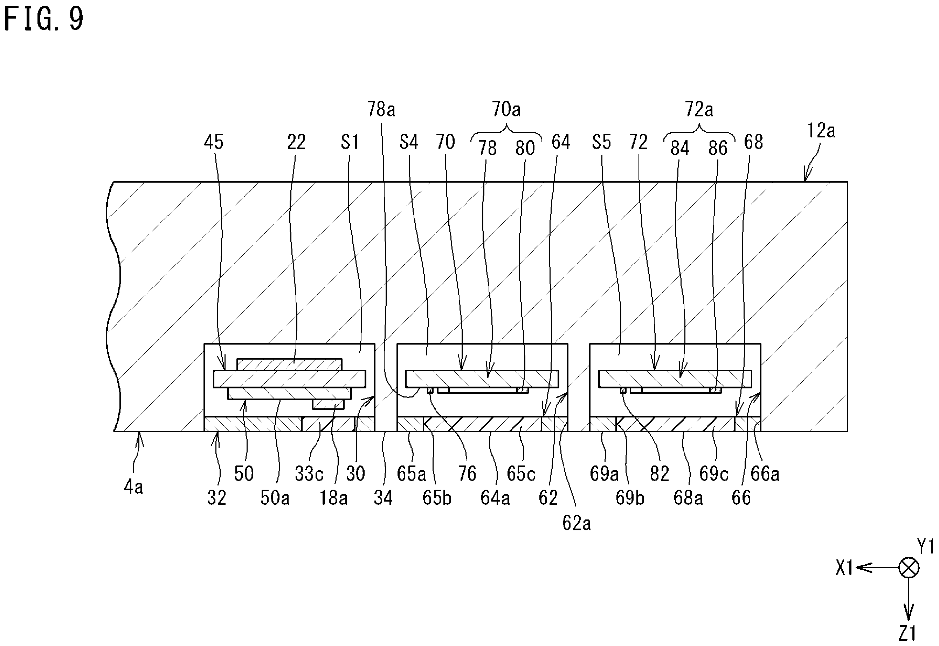

FIG. 8 shows the appearance of a part of the cutting tool 4 according to the present modification. FIG. 9 is a cross-sectional view showing a part of the cutting tool 4 according to the present modification.

FIG. 8 shows the first surface 4a as viewed from the front. FIG. 9 is a cross-sectional view along the X-Y plane.

As shown in FIG. 8 and FIG. 9, in the present example, the shank 12a includes a fourth recess portion 62, a lid portion 64, a fifth recess portion 66, and a lid portion 68, in addition to the first recess portion 30 and the lid portion 32.

The fourth recess portion 62 and the fifth recess portion 66 are provided so as to be arranged along the X-direction together with the first recess portion 30. The fourth recess portion 62 and the fifth recess portion 66 open to the first surface 4a.

The fourth recess portion 62 and the fifth recess portion 66 are recessed in the Z2-direction relative to the flat portion 34. When the first surface 4a is viewed from the front, the fourth recess portion 62 and the fifth recess portion 66 each have a rectangular shape.

The lid portion 64 is a rectangular plate-shaped member. The lid portion 64 is provided at an opening 62a of the fourth recess portion 62. The outer edge of the lid portion 64 is along the inner edge of the opening 62a. The lid portion 64 is fitted into the inner edge of the opening 62a and is fixed to the opening 62a. Thus, the lid portion 64 closes the opening 62a. An outer surface 64a of the lid portion 64 forms a part of the first surface 4a.

The lid portion 68 is a rectangular plate-shaped member. The lid portion 68 is provided at an opening 66a of the fifth recess portion 66. The outer edge of the lid portion 68 is along the inner edge of the opening 66a. The lid portion 68 is fitted into the inner edge of the opening 66a and is fixed to the opening 66a. Thus, the lid portion 68 closes the opening 66a. An outer surface 68a of the lid portion 68 forms a part of the first surface 4a.

The first rectenna 70 is housed in a housing space S4. The housing space S4 is a space defined by the fourth recess portion 62 and the lid portion 64.

The second rectenna 72 is housed in a housing space S5. The housing space S5 is a space defined by the fifth recess portion 66 and the lid portion 68.

As shown in FIG. 8 and FIG. 9, the lid portion 64 includes a lid body 65a, a window portion 65b, and a window lid 65c.

The lid body 65a is a rectangular plate-shaped metal member. The outer edge of the lid body 65a is along the inner edge of the opening 62a. The lid body 65a is fitted into the inner edge of the opening 62a and is fixed to the opening 62a.

The window portion 65b is formed in the lid body 65a. The window portion 65b is a rectangular shaped hole that communicates between the housing space S4 and the outside. The window portion 65b has a rectangular shape.

The window lid 65c is a rectangular plate-shaped member. The window lid 65c is made of a material such as resin that allows the power supplying radio wave received by the first rectenna 70 to pass through the material.

The outer edge of the window lid 65c is along the inner edge of the window portion 65b. The window lid 65c is fitted into the inner edge of the window portion 65b and is fixed to the window portion 65b.

A seal is formed between the outer edge of the lid body 65a and the inner edge of the opening 62a, and a seal is formed between the outer edge of the window lid 65c and the inner edge of the window portion 65b. This prevents coolant liquid and the like from entering the housing space S4.

The lid portion 68 includes a lid body 69a, a window portion 69b, and a window lid 69c. Since the lid portion 68 has the same configuration as the lid portion 64, the description thereof is omitted here.

The housing space S1 and the housing space S4 are in communication with each other through the communication passage (not shown) formed of a groove or a through-hole formed in the shank 12a. Similarly, the housing space S1 and the housing space S5 are in communication with each other through the communication passage formed of a groove or a through-hole formed in the shank 12a.

The first rectenna 70 and the second rectenna 72 are connected to the circuit board 45 inside the housing space S1 via lines passing through the communication passage.

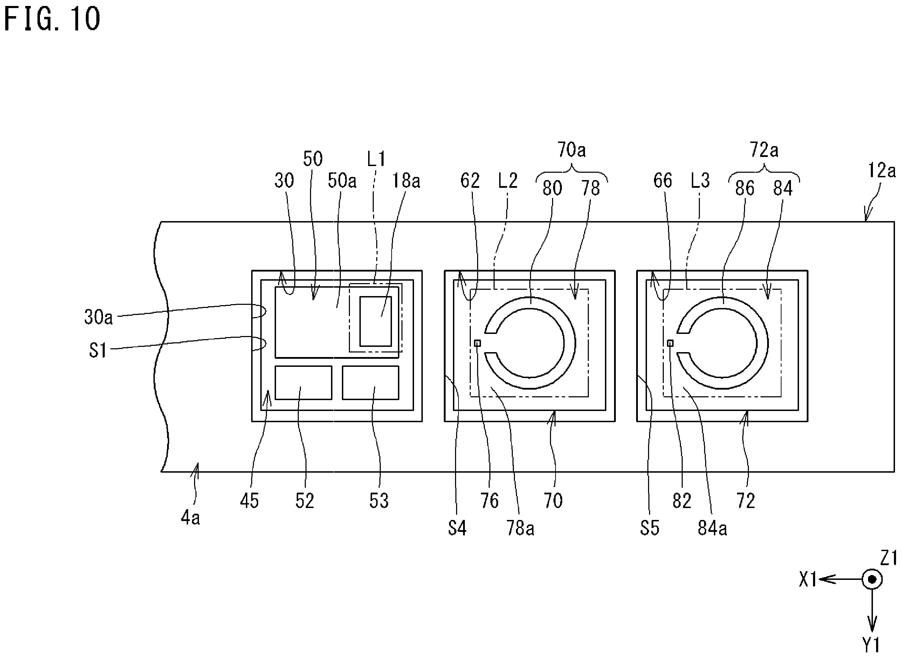

FIG. 10 shows the appearance of a part of the cutting tool 4 according to the present modification. FIG. 10 shows a state where the lid portions 32, 64, 68 have been removed. In addition, an alternate long and two short dashes line L1 in FIG. 10 indicates the contour of the window portion 33b. An alternate long and two short dashes line L2 indicates the contour of the window portion 65b. An alternate long and two short dashes line L3 indicates the contour of the window portion 69b.

In the present example, only the circuit board 45 is housed inside the housing space S1.

In the present example, the circuit board 45 includes a fourth circuit chip 53, in addition to the first circuit chip 50 and the second circuit chip 52. The fourth circuit chip 53 is a circuit chip including the combining circuit 74.

As shown in FIG. 9 and FIG. 10, the first rectenna 70 includes the aforementioned power receiving antenna 70a and a fifth circuit chip 76.

The fifth circuit chip 76 is a circuit chip including the rectifier circuit 70b. The fifth circuit chip 76 is mounted on a first surface 78a of an antenna substrate 78 of the power receiving antenna 70a. The first surface 78a of the antenna substrate 78 is a surface facing the Z1-direction.

The power receiving antenna 70a includes the aforementioned antenna substrate 78 and an antenna element 80.

The antenna element 80 is a conductor pattern such as copper foil mounted on the first surface 78a. The antenna element 80 is formed in a loop shape and forms a loop antenna.

The second rectenna 72 includes the aforementioned power receiving antenna 72a and a sixth circuit chip 82. The sixth circuit chip 82 is a circuit chip including the rectifier circuit 72b. The power receiving antenna 72a includes an antenna substrate 84 and an antenna element 86.

Since the second rectenna 72 has the same configuration as the first rectenna 70, the description thereof is omitted here.

As shown in FIG. 10, the transmitting and receiving antenna 18a on the circuit board 45 is disposed inside the alternate long and two short dashes line L1. Thus, the transmitting and receiving antenna 18a is positioned in a range corresponding to the window portion 33b (the window lid 33c), when the first surface 4a is viewed from the front.

In addition, the antenna element 80 is disposed inside the alternate long and two short dashes line L2. Thus, the antenna element 80 is positioned in a range corresponding to the window portion 65b (the window lid 65c), when the first surface 4a is viewed from the front.

Similarly, the antenna element 86 is disposed inside the alternate long and two short dashes line L3. Thus, the antenna element 86 is positioned in a range corresponding to the window portion 69b (the window lid 69c), when the first surface 4a is viewed from the front.

In the present modification as well, the window lids 33c, 65c, 69c are each made of a material that allows radio waves to pass through the material. Thus, it is possible to suppress the window lids 33c, 65c, 69c from obstructing the transmission and reception performed by each antenna.

Furthermore, since the transmitting and receiving antenna 18a and the antenna elements 80, 86 are disposed so as to face the window lids 33c, 65c, 69c, the transmission and reception of radio waves via the window lids 33c, 65c, 69c can be appropriately performed.

In addition, in the present modification, the cutting tool 4 includes the second rectenna 72, in addition to the first rectenna 70. Therefore, for example, in a case where the reception frequency band of the first rectenna 70 and the reception frequency band of the second rectenna 72 are set so as to be different from each other, it is possible to receive power supplying radio waves in two frequency bands.

In a case where the reception frequency band of the first rectenna 70 and the reception frequency band of the second rectenna 72 are set to be equal to each other, power reception efficiency can be improved by combining the outputs of both circuits 70, 72.

In the present modification, although two rectennas are provided, three, four, or more rectennas may be provided.

In addition, in the present modification, since the circuit board 45, the first rectenna 70, and the second rectenna 72 are individually housed in the three housing spaces S1, S4, S5, it is possible to reduce mutual interference when each circuit transmits or receives radio waves.

### [Others]

The embodiment disclosed herein is merely illustrative and not restrictive in all aspects.

For example, in the above embodiment, the lid portion 32 includes the lid body 33a made of metal and the window lid 33c closing the window portion 33b, and the window lid 33c is made of a material such as resin that allows radio waves to pass through the material. However, the entire lid portion 32 may be made of a material such as resin that allows radio waves to pass through the material, for example.

In this case, it is possible to suppress the lid portion 32 from obstructing the transmission and reception of radio waves performed by the transmitting and receiving antenna 18a and the reception of a power supplying radio wave performed by the pair of antenna elements 58.

Furthermore, since the pair of antenna elements 58 and the transmitting and receiving antenna 18a are disposed so as to face the window portion 33b, the transmission and reception of radio waves via the window lid 33c can be appropriately performed.

In addition, in the embodiment described above, the strain sensor is used as a sensor for detecting the state of the cutting tool 4. However, instead of the strain sensor, a temperature sensor or an acceleration sensor may be used to detect the state of cutting machining (the state of the cutting tool 4).

The scope of the present invention is defined by the scope of the claims rather than the meaning described above, and is intended to include meaning equivalent to the scope of the claims and all modifications within the scope.

### REFERENCE SIGNS LIST

- 1: cutting machining system
- 2: machine tool
- 2a: bed
- 2b: housing
- 2b1: housing body
- 2b2: open-close door
- 2c: turret
- 4: cutting tool
- 4a: first surface
- 4b: second surface
- 4c: third surface
- 6: power supply device
- 8: power transmission antenna
- 10: control device
- 12: body portion
- 12a: shank
- 12b: cutting tip
- 12b1: rake face
- 12b2: side clearance face
- 14: strain sensor
- 16: strain sensor
- 18: wireless communication circuit
- 18a: transmitting and receiving antenna
- 20: rectenna
- 20a: power receiving antenna
- 20b: rectifier circuit
- 22: power storage unit
- 24: charging control circuit
- 24a: line
- 30: first recess portion
- 30a: opening
- 32: lid portion
- 32a: outer surface
- 33a: lid body
- 33b: window portion
- 33c: window lid
- 34: flat portion
- 36: second recess portion
- 38: sensor lid portion
- 40: third recess portion
- 42: sensor lid portion
- 45: circuit board
- 46: board body
- 46a: first surface
- 46b: second surface
- 50: first circuit chip
- 50a: chip surface
- 52: second circuit chip
- 54: antenna substrate
- 54a: first surface
- 54b: second surface
- 56: third circuit chip
- 58: antenna element
- 60: power supply line
- 62: fourth recess portion
- 62a: opening
- 64: lid portion
- 64a: outer surface
- 65a: lid body
- 65b: window portion
- 65bb: window portion
- 65c: window lid
- 66: fifth recess portion
- 66a: opening
- 68: lid portion
- 68a: outer surface
- 69a: lid body
- 69b: window portion
- 69c: window lid
- 70: first rectenna
- 70a: power receiving antenna
- 70b: rectifier circuit
- 72: second rectenna
- 72a: power receiving antenna
- 72b: rectifier circuit
- 74: combining circuit
- 76: fifth circuit chip
- 76a: first surface
- 78: antenna substrate
- 78a: first surface
- 80: antenna element
- 82: sixth circuit chip
- 84: antenna substrate
- 86: antenna element
- 100: power source
- L: alternate long and two short dashes line
- L1: alternate long and two short dashes line
- L2: alternate long and two short dashes line
- L3: alternate long and two short dashes line
- S: machining space
- S1: housing space
- S2: housing space
- S3: housing space
- S4: housing space
- S5: housing space

## Claims

1. A cutting tool comprising:
a body portion disposed in a machining space of a machine tool;
a sensor provided in the body portion;
a wireless communication circuit configured to transmit an output of the sensor; and
a first power reception antenna circuit configured to receive a power supplying radio wave transmitted from a power transmission antenna provided in the machining space and to output electric power.

2. The cutting tool according to claim 1, further comprising
a power storage unit configured to store the electric power.

3. The cutting tool according to claim 1 or 2, wherein
the body portion includes
a cutting tip, and
a shank having a bar shape and having an end portion at which the cutting tip is mounted, and
the sensor, the wireless communication circuit, and the first power reception antenna circuit are arranged in the shank, from the end portion side, along a longitudinal direction of the shank, in an order of the sensor, the wireless communication circuit, and the first power reception antenna circuit.

4. The cutting tool according to claim 3, wherein
the shank includes
a recess portion that opens to a side surface of the shank, and
a lid portion that closes an opening of the recess portion, and
the wireless communication circuit and the first power reception antenna circuit are housed in a housing space defined by the recess portion and the lid portion.

5. The cutting tool according to claim 4, wherein the lid portion is made of a material that allows the power supplying radio wave and radio waves transmitted and received by the wireless communication circuit to pass through the material.

6. The cutting tool according to claim 5, wherein
the wireless communication circuit includes a transmitting and receiving antenna,
the first power reception antenna circuit includes a power receiving antenna, and
the power receiving antenna and the transmitting and receiving antenna are disposed so as to face the lid portion.

7. The cutting tool according to claim 4, wherein
the lid portion includes
a window portion that communicates between the housing space and outside, and
a window lid closing the window portion and made of a material that allows the power supplying radio wave and radio waves transmitted and received by the wireless communication circuit to pass through the material.

8. The cutting tool according to claim 7, wherein
the wireless communication circuit includes a transmitting and receiving antenna,
the first power reception antenna circuit includes a power receiving antenna, and
the power receiving antenna and the transmitting and receiving antenna are disposed so as to face the window lid.

9. The cutting tool according to claim 8, wherein the power receiving antenna and the transmitting and receiving antenna are disposed close to each other.

10. The cutting tool according to any one of claims 1 to 9, further comprising:
a second power reception antenna circuit configured to receive a power supplying radio wave transmitted from the power transmission antenna provided in the machining space and to output electric power; and
a combining circuit configured to combine electric power outputted from the first power reception antenna circuit and electric power outputted from the second power reception antenna circuit.

11. The cutting tool according to claim 10, wherein
the body portion includes a shank having a bar shape,
the shank includes
three recess portions that open to a side surface of the shank, and
three lid portions that close three openings of the three recess portions, and
the wireless communication circuit, the first power reception antenna circuit, and the second power reception antenna circuit are individually housed in three housing spaces defined by the three recess portions and the three lid portions.
